(19) **Europäisches Patentamt / European Patent Office / Office européen des brevets**

(11) **EP 3 972 363 A1**

(12) # EUROPEAN PATENT APPLICATION
published in accordance with Art. 153(4) EPC

(43) Date of publication:
**23.03.2022 Bulletin 2022/12**

(21) Application number: **20806646.4**

(22) Date of filing: **14.05.2020**

(51) International Patent Classification (IPC):
**H04W 72/04** (2009.01)     **H04W 52/18** (2009.01)
**H04W 52/54** (2009.01)

(52) Cooperative Patent Classification (CPC):
**H04W 52/18; H04W 52/54; H04W 72/04**

(86) International application number:
**PCT/JP2020/019331**

(87) International publication number:
**WO 2020/230861 (19.11.2020 Gazette 2020/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.05.2019 JP 2019092451**

(71) Applicant: **NTT DOCOMO, INC.**
**Chiyoda-Ku**
**Tokyo 100-6150 (JP)**

(72) Inventors:
• **TAKAHASHI, Yuki**
  **Tokyo 100-6150 (JP)**
• **YOSHIOKA, Shohei**
  **Tokyo 100-6150 (JP)**
• **NAGATA, Satoshi**
  **Tokyo 100-6150 (JP)**
• **WANG, Lihui**
  **Beijing 100190 (CN)**
• **HOU, Xiaolin**
  **Beijing 100190 (CN)**

(74) Representative: **Hoffmann Eitle**
**Patent- und Rechtsanwälte PartmbB**
**Arabellastraße 30**
**81925 München (DE)**

(54) **USER EQUIPMENT AND WIRELESS COMMUNICATION METHOD**

(57)     To appropriately control transmission power. A user terminal includes: a reception section that receives a given parameter used for transmission power control of an uplink channel; and a control section that determines at least one of the number of times of uplink channel transmission to which the given parameter is applied and a transmission range based on downlink control information.

FIG. 2

**Description**

Technical Field

The present disclosure relates to a user terminal and a radio communication method in a next-generation mobile communication system.

Background Art

In the universal mobile telecommunications system (UMTS) network, the specifications of long term evolution (LTE) have been drafted for the purpose of further increasing data rates, providing low delays, and so on (see Non Patent Literature 1). In addition, the specifications of LTE-Advanced (third generation partnership project (3GPP) Release (Rel.) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), New Radio (NR), or 3GPP Rel. 15 or later) are also being studied.

Citation List

Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010.

Summary of Invention

Technical Problem

In a future radio communication system (for example, NR), it is assumed that one user terminal (UE) performs communication using a plurality of services (or also referred to as a type or a traffic type).

Examples of the plurality of services include highspeed and large-capacity services with different requirements (for example, services related to eMBB (enhanced Mobile Broad Band) (eMBB services)) and ultrahigh reliability and low-latency services (for example, services related to URLLC (Ultra Reliable and Low Latency Communications (URLLC services)).

In the NR, it is also assumed that transmission power is separately controlled for each service (or type). However, a method of controlling the transmission power has not been sufficiently studied yet. In a case where the transmission power control is not appropriately performed, communication quality or the like may be deteriorated.

In this regard, an object of the present disclosure is to provide a user terminal and a radio communication method capable of appropriately controlling transmission power.

Solution to Problem

A user terminal according to an aspect of the present disclosure includes: a reception section that receives a given parameter used for transmission power control of an uplink channel; and a control section that determines at least one of the number of times of uplink channel transmission to which the given parameter is applied and a transmission range based on downlink control information.

Advantageous Effects of Invention

According to one aspect of the present disclosure, transmission power can be controlled appropriately.

Brief Description of Drawings

Fig. 1 is a diagram for explaining a problem of application of a parameter for power adjustment.
Fig. 2 is a diagram illustrating an example of transmission power control according to a first aspect.
Fig. 3 is a diagram illustrating another example of transmission power control according to the first aspect.

Fig. 4 is a diagram illustrating an example of a schematic configuration of a radio communication system according to one embodiment.

Fig. 5 is a diagram illustrating an example of a configuration of a base station according to the embodiment.

Fig. 6 is a diagram illustrating an example of a configuration of a user terminal according to the embodiment.

Fig. 7 is a diagram illustrating an example of a hardware configuration of the base station and the user terminal according to the embodiment.

Description of Embodiments

(Service/Type)

Future radio communication systems (for example, NR) are expected to involve traffic types (also referred to as types, services, service types, communication types, or use cases) such as an enhanced mobile broadband (eMBB), machine type communications that embody multiple simultaneous connection (for example, massive machine type communications (mMTC), Internet of Things (IoT), and ultra-reliable and low-latency communications (URLLC). For example, it is required that URLLC have smaller latency and higher reliability than eMBB.

The traffic type may be identified in the physical layer based on at least one of the following.

- Logical channels with different priorities
- Modulation and coding scheme (MCS) table (MCS index table)
- Channel quality indication (CQI) table
- DCI format
- System information-radio network temporary identifier (RNTI) used for scrambling (masking) of cyclic redundancy check (CRC) bit included in (added to) the DCI (DCI format)
- Radio resource control (RRC) parameter
- Specific RNTI (for example, RNTI for URLLC, MCS-C-RNTI, or the like)
- Search Space
- Given field in DCI (for example, reuse of newly added field or existing field)

Specifically, a traffic type of the HARQ-ACK for a PDSCH may be determined based on at least one of the following.

- MCS index table used to determine at least one of the modulation order, target code rate, and transport block size (TBS) of the PDSCH (for example, whether to use MCS index table 3)
- RNTI used for CRC scrambling of DCI used for scheduling the PDSCH (for example, whether CRC scrambled with C-RNTI or MCS-C-RNTI)

A traffic type of the SR may be determined based on a higher layer parameter used as an SR identifier (SR-ID). The higher layer parameter may indicate whether the traffic type of the SR is eMBB or URLLC.

A traffic type of the CSI may be determined based on configuration information related to CSI report (CSI report setting). The configuration information may indicate whether the traffic type of the CSI is eMBB or URLLC. The configuration information may be a higher layer parameter.

A traffic type of the PUSCH may be determined based on at least one of the following.

- MCS index table used to determine at least one of the modulation order, target code rate, and TBS of the PUSCH (for example, whether to use MCS index table 3).
- RNTI used for CRC scrambling of DCI used for scheduling the PUSCH (for example, whether CRC scrambled with C-RNTI or MCS-C-RNTI)

A traffic type may be associated with communication requirements (requirements and required conditions such as latency and error rate), a data type (voice, data, etc.), or the like.

A difference between URLLC requirements and eMBB requirements may be that URLLC is lower in latency than eMBB or that URLLC requirements include reliability requirements.

For example, eMBB user (U)-plane latency requirements may include that downlink U-plane latency is 4 ms and that uplink U-plane latency is 4 ms. On the other hand, URLLC U-plane latency requirements may include that downlink U-plane latency is 0.5 ms and that uplink U-plane latency is 0.5 ms. Furthermore, the URLLC reliability requirements may include that a 32-byte error rate is $10^{-5}$ for a U-plane latency of 1 ms.

(Transmission power control of UL)

In Rel. 15, the UE performs transmission power control (TPC) for each transmission occasion i. The transmission occasion i may be a transmission occasion of a PUSCH, a PUCCH, an SRS, or a PRACH. The transmission occasion i may be defined by a slot index $n_{s,f}^{\mu}$ for a subcarrier spacing configuration $\mu$ in a frame having a system frame number (SFN), a first symbol (an index of a first symbol of the transmission occasion i) S in the slot, and the number of consecutive symbols L.

The transmission power of the PUSCH is controlled based on a TPC command (also referred to as a value, an increased/decreased value, a correction value, and the like) indicated by a value of a given field (also referred to as a TPC command field, a first field, and the like) in the DCI.

For example, when the UE transmits the PUSCH on the BWP b of the carrier f of the cell c by using the parameter set (for example, an open loop parameter set) having the index j and the index l of the power control adjustment state, the transmission power ($P_{PUSCH,b,f,c}(i,j,q_d,l)$) of the PUSCH in the PUSCH transmission occasion (also referred to as a transmission period or the like) i may be expressed by following Formula (1).

Here, the power control adjustment state may be configured by the higher layer parameter whether it has a plurality of states (for example, two states) or a single state. Also, when a plurality of power control adjustment states is configured, one of the plurality of power control adjustment states may be identified by the index l (for example, $l \in \{0, 1\}$). The power control adjustment state may be referred to as a PUSCH power control adjustment state, a first or second state, or the like.

Further, the PUSCH transmission occasion i is a given period during which a PUSCH is transmitted, and may be composed of, for example, one or more symbols, one or more slots, and the like.

[Math 1]

Formula (1)

$$P_{\text{PUSCH},b,f,c}(i,j,q_d,l) = \min \begin{cases} P_{\text{CMAX},f,c}(i), \\ P_{\text{O\_PUSCH},b,f,c}(j) + 10\log_{10}(2^{\mu} \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i,l) \end{cases}$$

In Formula (1), $P_{\text{CMAX},f,c(i)}$ is, for example, transmission power (also referred to as maximum transmission power or the like) of the user terminal set for the carrier f of the cell c in the transmission occasion i. $P_{\text{O PUSCH},b,f,c}(j)$ is, for example, a parameter (for example, also referred to as a parameter related to a transmission power offset, a transmission power offset P0, a target reception power parameter, and the like) related to the target reception power set for the BWP b of the carrier f of the cell c in the transmission occasion i.

$M_{\text{RB},b,f,c}^{\text{PUSCH}}(i)$ is, for example, the number of resource blocks (bandwidth) allocated to the PUSCH for the transmission occasion i in the uplink BWP b of the carrier f with the cell c and the subcarrier spacing $\mu$. $\alpha_{b,f,c}(j)$ is a value (for example, also referred to as msg3-Alpha, p0-PUSCH-Alpha, a fractional factor, or the like) provided by the higher layer parameter.

$PL_{b,f,c}(q_d)$ is, for example, a path-loss (path loss compensation) calculated by the user terminal using the index $q_d$ of the reference signal for the downlink BWP associated with the uplink BWP b of the carrier f of the cell c.

$\Delta_{\text{TF},b,f,c}(i)$ are transmission power adjustment components (offset, transmission format compensation) for the uplink BWP b of the carrier f of the cell c.

$f_{b,f,c}(i,l)$ is a value (for example, the cumulative value of the TPC command and the value by the closed loop) based on the TPC command of the power control adjustment state index l of the uplink BWP of the carrier f of the cell c and the transmission occasion i. For example, the cumulative value of the TPC command may be expressed by a given formula.

The TPC command may be determined based on a value of a given field (also referred to as a TPC command field, a first field, or the like) in the DCI used for the schedule of the PUSCH or the PDSCH. These DCIs may be referred to as DCI formats 0_0 and 0_1. The power control information may be referred to as a TPC command (also referred to as a value, an increased/decreased value, a correction value, and the like).

Further, in the NR, a DCI format (for example, DCI format 2_2) used for transmission of at least one TPC command of the PUCCH and the PUSCH is supported. The UE may control the transmission power of at least one of the PUCCH and the PUSCH based on the value indicated by the TPC command in the DCI format. The DCI format used for transmission of the TPC command may be configured (not including scheduling information) not to be used for scheduling of the PDSCH or the PUSCH.

In addition, TPC commands designated by DCI (for example, at least one of DCI formats 0_0, 0_1, and 2_2) for each PUSCH or PUCCH transmission may be accumulated (tpc-accumulation). Whether or not the UE accumulates the TPC command may be set from the network (for example, a base station). The base station may notify the UE of the presence or absence of the accumulation of the TPC command by using higher layer signaling (for example, tpc-Accumulation).

When the accumulation of the TPC command is applied (enabled), the UE may determine the transmission power in consideration of the TPC command notified by given DCI (or PDCCH). In addition, the TPC command may be included in one (for example, a part of a given mathematical expression) of parameters of the power control adjustment state defined by a given formula.

As described above, in the NR, the transmission power of the UL channel (for example, at least one of PUSCH and PUCCH) is determined based on the parameter notified from the network (for example, a base station).

(Transmission power control for each service/type)

In the NR, it is also assumed that transmission power is separately controlled (for example, power adjustment) for each service (or type). For example, when the UE performs transmission in different types (or priority) of UL channels (for example, the PUSCH), it is also conceivable to apply a method of separately controlling the uplink transmission power for each type (for example, different transmission power controls).

As an example, for the UL channel of the first type (for example, eMBB), it is conceivable to control the transmission power similarly to Rel. 15, and for the UL channel of the second type (for example, URLLC), it is conceivable to control the transmission power independently of the first type.

For example, it is also conceivable to greatly change the transmission power instantaneously according to the communication environment or the communication situation for a given type (for example, URLLC) of UL channel requiring high reliability. The instantaneous large change in the transmission power may be referred to as power boosting, power boosting, spike, or burst.

As a case where the power boost is applied to a given type of UL channel, a case where a path-loss (PL) is changed (Case 1) and a case where UL channels are multiplexed between UEs (Case 2) are considered. In Case 1, for example, it is assumed that control is performed so that the transmission power of the UL channel increases in a case where PL increases (for example, a case where the communication environment deteriorates). In Case 2, in a case where the transmission of the UL channel of the first type (for example, eMBB) and the transmission of the UL channel of the second type (for example, URLLC) are multiplexed (for example, overlap) between UEs, it is assumed that the transmission power of the UL channel of the second type is controlled to be high.

In Case 1, it is preferable to continuously apply the changed (for example, power boost) transmission power until PL is changed again. In other words, it is preferable that the power boost is applied not only to one time of UL transmission but also to the subsequent UL transmission for a given period (for example, the changed transmission power value is accumulated between a plurality of UL transmissions).

On the other hand, in Case 2, only in a case where the transmissions of the different types of UL channels overlap, the transmission power may be controlled to be high (power boost is applied). In other words, it is preferable to employ a configuration in which the power boost is applied only to one time of UL transmission (one shot) and is not necessarily applied to the subsequent UL transmission (for example, the changed transmission power value is not accumulated between the plurality of UL transmissions).

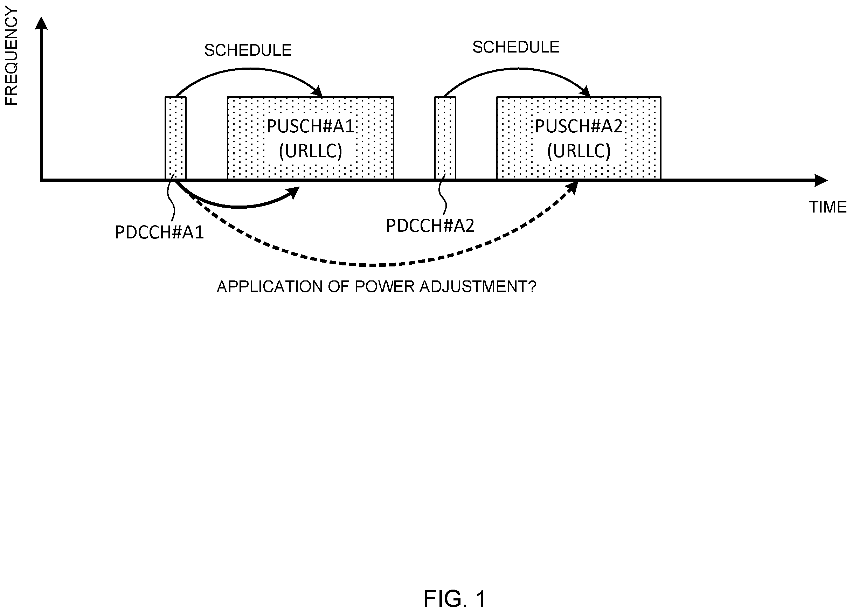

In the case of performing power adjustment in this way, a method in which the UE determines the number of times of UL transmission to which the adjusted transmission power (for example, power boost) is applied becomes a problem. That is, the UE needs to determine whether to apply the power boost only to one time of given UL channel transmission or to continuously apply the power boost to the UL transmission subsequent to the given UL channel transmission (see Fig. 1).

In this regard, the present inventors have studied a method of appropriately determining the UL transmission to which the adjusted transmission power is applied, and have reached the present invention.

Hereinafter, embodiments according to the present disclosure will be described in detail with reference to the drawings. The respective aspects may be applied individually or in combination. In the following description, an uplink shared channel (for example, the PUSCH) will be described as an example of the UL channel (or UL physical channel), but may be similarly applied to the uplink control channel. For example, the PUSCH may be replaced with the PUCCH in the following description.

(Application case of transmission power control)

In the following description, the first parameter and the second parameter will be described as examples of the parameter used for the UL transmission power control (for example, power boost), but the number of parameters is not limited thereto and may be one. For example, the parameter used for the UL transmission power control may include one of the first parameter and the second parameter.

In addition, a case where an open-loop power control parameter set is used as the first parameter and a closed loop power control parameter is used as the second parameter will be described as an example, but the present invention is not limited thereto. In addition, examples of the open-loop power control parameter set include a set of P0 and $\alpha$ in above Formula (1), and examples of the closed loop power control parameter include the TPC command (for example, delta) (alternatively, the power control adjustment state) in above Formula (2). However, the present invention is not limited thereto. For example, the open-loop power control parameter set may be replaced with the first parameter including either P0 or $\alpha$.

In the following description, the transmission of the UL channel corresponding to a given service (or type, priority) will be described as an example, but the following configuration may be applied only to the UL channel of a given service or may be applied to the UL channel of another service. The given service may be a UL channel (alternatively, a high-priority UL channel) of

URLLC.

(First Aspect)

In a first aspect, UL transmission to which given power adjustment is applied is determined based on given information transmitted from a network (for example, a base station).

Based on the given information, the UE may determine whether to apply the given power adjustment only to one time of given UL transmission (one shot transmission) or to other UL transmissions subsequent to the given UL transmission (for example, accumulate).

The given information may be notified to the UE by using signaling to be dynamically notified. The signaling to be dynamically notified may be referred to as dynamic L1 signaling or downlink control information (for example, DCI).

For example, the signaling to be dynamically notified may be transmitted using a specific DCI format (specific DCI formats). The specific DCI format may be UE-specific DCI (UE-specific DCI) unique to the UE or may be group common DCI (group common DCI) common to a plurality of UEs.

The UE may determine at least one of the number of times of UL transmission to which a given parameter (alternatively, power adjustment based on the given parameter) used for the transmission power control is applied and the range of the UL transmission based on the given information included in the downlink control information (for example, DCI) transmitted from the base station. The base station may use a given field (for example, 1 bit) included in the DCI to notify the UE of whether or not to apply the power adjustment to only one time of the given UL transmission (one shot transmission).

The given parameter may include at least one of the first parameter (for example, a combination of P0 and $\alpha$) and the second parameter (for example, the TPC command). The first parameter and the second parameter may be notified to the UE by using at least one of the downlink control information and the higher layer signaling.

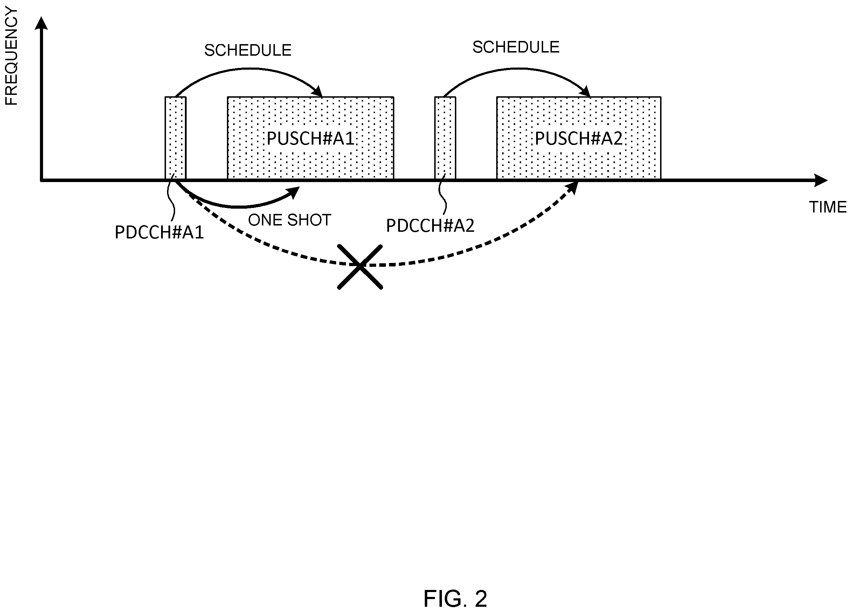

For example, in a case where the UE is notified that the power adjustment is applied only to one time of the given UL transmission (one shot transmission), the UE performs control such that the given parameter is applied only to the given UL transmission and is not applied to the subsequent UL transmission (for example, do not accumulate) (see Fig. 2).

Fig. 2 illustrates a case where a PUSCH #A1 is scheduled by the PDCCH #A1 (or DCI #A1) and a PUSCH #A2 is scheduled by the PDCCH #A2 (or DCI #A2). In a case where the UE is notified by given information that the power adjustment is applied only to the one shot transmission, the UE performs control to apply the power adjustment parameter notified by the PDCCH #A1 only to the PUSCH #A1 and not to apply the power adjustment parameter to the PUSCH #A2.

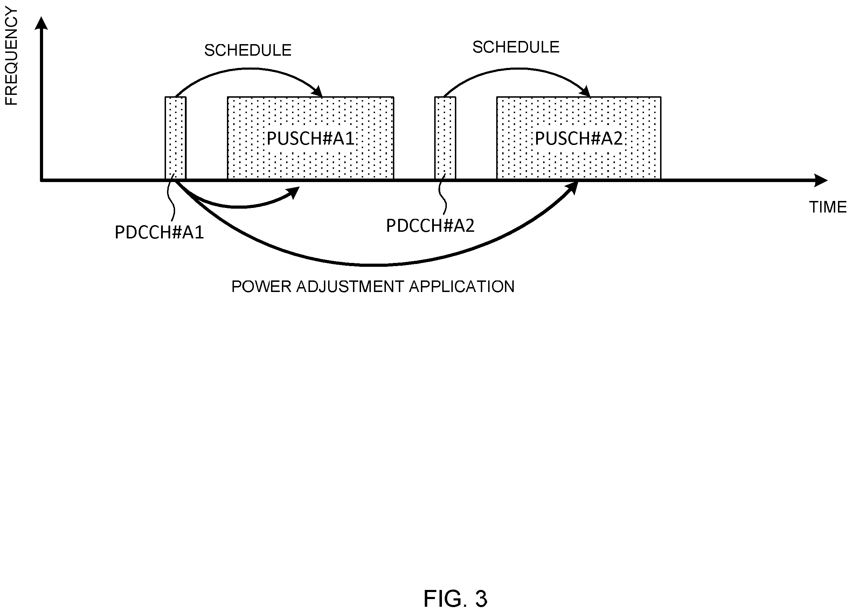

On the other hand, in a case where the UE is notified that the power adjustment is applied to a plurality of UL transmissions, the UE performs control to apply (for example, accumulate) the given parameter to the given UL transmission and the subsequent other UL transmissions (see Fig. 3).

Fig. 3 illustrates a case where the PUSCH #A1 is scheduled by the PDCCH #A1 (or DCI #A1) and the PUSCH #A2 is scheduled by the PDCCH #A2 (or DCI #A2). In a case where the UE is notified by given information that the power adjustment is applied to a plurality of UL transmissions, the UE performs control to apply the power adjustment parameter notified by the PDCCH #A1 to the PUSCH #A1 and the subsequent given UL transmissions (here, PUSCH #A2) .

Incidentally, In Fig. 2 or Fig. 3, the given information may be included in the PDCCH #A1 or may be included in another PDCCH (for example, the PDCCH #A2 or a PDCCH for transmitting a TPC command).

The information on a given parameter (for example, the TPC command) for power adjustment may be included in a PDCCH different from the PDCCH #A1 for scheduling the PUSCH #A1. Alternatively, the information on the given parameter may be included in the DCI including the given information, or may be included in the DCI different from the downlink control information including the given information. In a case where the given parameter and the given information are included in the same DCI, these pieces of information may be set in the same field (joint field) or may be set in different fields (separated field).

Alternatively, whether to apply the given power adjustment to only one time (one shot transmission) or to other UL transmissions may be notified to the UE using a different DCI type. The DCI type may be at least one of a DCI format and an RNTI applied to CRC scrambling of the DCI.

For example, in a case where a UL channel of a given type (for example, URLLC) is redundantly mapped to a UL channel of another type (for example, eMBB), transmission power control may be instructed by first DCI (for example, DCI #X). On the other hand, in a case where only the UL channel of the given type is transmitted, the transmission power control may be instructed by second DCI (for example, DCI #Y). The DCI #X and the DCI #Y may have different configurations in at least one of the DCI format and the RNTI applied to the CRC scrambling.

When receiving the DCI #X, the UE may determine the transmission power by applying a given parameter (for example, the parameter notified by the DCI #X) only to one time of given UL transmission (see Fig. 2). On the other hand, when receiving the DCI #Y, the UE may determine the transmission power by applying a given parameter (for example, the parameter notified by DCI #Y) not only to the given UL transmission but also to the subsequent UL transmission (see Fig. 3).

In this way, when at least one of the number (for example, one shot or not) of times of UL transmission to which given power adjustment is applied and the range of the UL transmission is determined based on the given information, it is possible to flexibly control the transmission power according to the communication environment. Accordingly, a communication quality can be improved.

(Second Aspect)

In a second aspect, a candidate (alternatively, a parameter candidate set) of the parameter used for transmission power control (alternatively, power adjustment) of the UL is set in the UE, and a given parameter is selected from a plurality of parameter candidates and applied.

The base station sets a given parameter candidate (alternatively, the parameter candidate set) used for power adjustment in the UE by higher layer signaling (for example, at least one of RRC signaling and broadcast information). For example, the base station may set a plurality of candidates for a first parameter set (for example, P0, $\alpha$) in the UE.

Further, the base station may notify the UE of information for designating a given first parameter set from the plurality of candidates of the first parameter set by using the downlink control information. The UE may control the transmission power after specifying a specific parameter from the plurality of candidates based on the downlink control information.

As described above, by using the information included in a given field included in the downlink control information, the base station notifies the UE of the first parameter to enable dynamical change and application of the first parameter. The UE may dynamically control the transmission power of the UL channel based on the first parameter (for example, P0, $\alpha$) designated in the downlink control information and the second parameter (for example, the TPC command) included in the downlink control information.

The information for designating the first parameter candidate may be set in the same field (joint field) as other parameters included in the DCI, or may be set in a different field (separated field).

For example, the information for designating the first parameter candidate may be set in the same field as the TPC command. Alternatively, the information for designating the first parameter candidate may be set in the same field as an SRS resource index (SRI). The SRS resource index is used to designate a resource used for transmission of the SRS.

When performing the power adjustment based on at least one of the first parameter designated by the DCI and the second parameter (for example, the TPC command) included in the DCI, the UE may determine the UL transmission to which the power adjustment is applied based on the given information. For example, the UE may determine whether to apply the power adjustment only to one time of the given UL transmission (one shot transmission) by using the configuration described in the first aspect.

Alternatively, the UE may determine the UL transmission (for example, one shot or not) to which the power adjustment is applied based on a TPC command table (for example, a value associated with a bit value included in the DCI, or the like) used for the power adjustment.

<TPC Command Table>

In the existing specification (for example, Rel. 15), a correspondence relationship between bits (two bits) of a field for the TPC command included in the DCI and a TPC command value (or a TPC value) is defined by a table (also referred to as the TPC command table). In a case where a plurality of types of UL channel transmission are supported, it is also assumed that the range of TPC values and the size of the TPC command table (for example, the number of bits) are extended.

As an extension method, at least one of the case (extension method 1) of introducing another TPC command table (new table) while maintaining the size (two bits) of the TPC command table and the case (extension method 2) of increasing (for example, changing from two bits to three bits or more) the size of the TPC command table can be considered. As an example, a new TPC command table or a new TPC command value may be supported for a UL channel of a given type (for example, URLLC).

In such a case, the UE may determine the UL transmission (for example, one shot or not) to which the power adjustment is applied based on the applied TPC command table (alternatively, the TPC command value).

For example, it is assumed that the UE applies the same TPC command table (alternatively, the same TPC command value as the existing specification) as the existing specification based on the bits of the TPC field included in the DCI. In such a case, the UE may determine the transmission power by applying the parameter designated in the DCI not only to the given UL transmission but also to the subsequent UL transmission.

Alternatively, it is assumed that the UE applies a TPC command table (alternatively, a TPC command value different from the existing specification) different from the existing specification based on the bits of the TPC field included in the DCI. In such a case, the UE may determine the transmission power by applying the parameter designated in the DCI only to one time of the given UL transmission.

(Third Aspect)

In a third aspect, for a given type of UL channel transmission, the parameter for power adjustment is always applied only to one time of UL transmission (one shot transmission).

In the UE, the UE performs control such that the power adjustment parameter notified using at least one of the downlink control information and the higher layer signaling is applied only to given UL transmission (one shot transmission) and is not applied to the subsequent UL transmission (for example, do not accumulate).

In this case, the base station may control the UE not to set accumulation of the TPC command. The UE may control the UL transmission power in consideration of the TPC command value notified by the DCI and without considering the TPC command included in other DCI (transmitted DCI).

Incidentally, for other types of UL channel transmission, the UE may accumulate the TPC command based on the setting from the base station.

In this way, for the given type of UL channel transmission, the parameter for power adjustment is always applied only to one time of the UL transmission (one shot transmission), whereby the UE operation can be simplified. In addition, the UL transmission power can be flexibly controlled by separately controlling the presence or absence of accumulation of the parameter for power adjustment for each type.

(Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

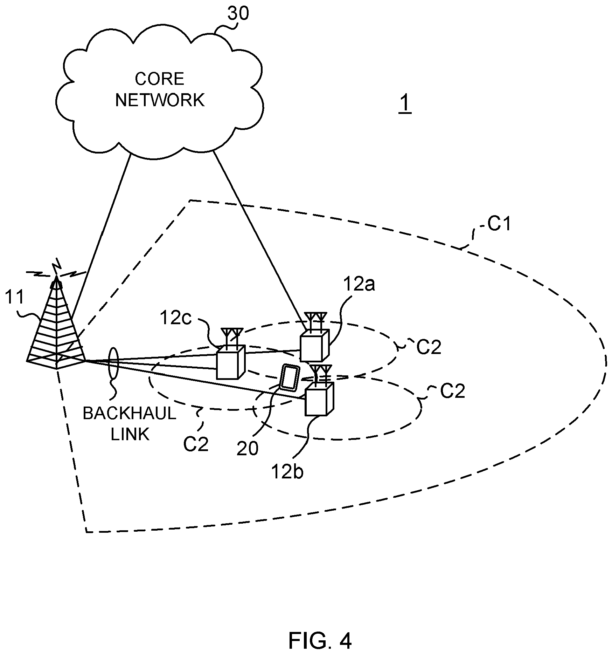

Fig. 4 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In EN-DC, an LTE (E-UTRA) base station (eNB) is a master node (MN), and an NR base station (gNB) is a secondary node (SN). In NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNBs) (NR-NR dual connectivity (NN-DC)).

The radio communication system 1 may include a base station 11 that forms a macro cell C1 with a relatively wide coverage, and base stations 12 (12a to 12c) that are arranged in the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as base stations 10 unless specified otherwise.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range 1 (FR1) and a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of FR1 and FR2 are not limited to these, and for example, FR1 may be a frequency range higher than FR2.

Further, the user terminal 20 may perform communication on each CC using at least one of time division duplex (TDD) or frequency division duplex (FDD).

The plurality of base stations 10 may be connected by wire (for example, an optical fiber or an X2 interface in compliance with common public radio interface (CPRI)) or by radio (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

A base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that, in the radio communication system 1, another radio access method (for example, another single carrier transmission method and another multi-carrier transmission method) may be used as UL and DL radio access methods.

In the radio communication system 1, as a downlink channel, a downlink shared channel (a physical downlink shared channel (PDSCH)) shared by each user terminal 20, a broadcast channel (a physical broadcast channel (PBCH)), a downlink control channel (a physical downlink control channel (PDCCH)), or the like may be used.

In the radio communication system 1, an uplink shared channel (physical uplink shared channel (PUSCH)) shared by each user terminal 20, an uplink control channel (physical uplink control channel (PUCCH)), a random access channel (physical random access channel (PRACH)), and the like may be used as uplink channels.

User data, higher layer control information, and a system information block (SIB) and the like are transmitted by the PDSCH. The PUSCH may transmit user data, higher layer control information, and the like. Further, the PBCH may transmit a master information block (MIB).

Lower layer control information may be transmitted by PDCCH. The lower layer control information may include, for example, downlink control information (DCI) including scheduling information of at least one of the PDSCH and the PUSCH.

Note that, the DCI for scheduling the PDSCH may be referred to as DL assignment, DL DCI, and the like, and the DCI for scheduling the PUSCH may be referred to as UL grant, UL DCI, and the like. Note that PDSCH may be replaced with DL data, and PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or a plurality of search spaces. The UE may monitor CORESET associated with a certain search space based on search space configuration.

One search space may correspond to a PDCCH candidate corresponding to one or a plurality of aggregation levels. One or a plurality of search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (which may be referred to as, for example, hybrid automatic repeat request acknowledgement (HARQ-ACK), ACK/NACK, or the like), scheduling request (SR), or the like may be transmitted on the PUCCH. A random access preamble for establishing a connection with a cell may be transmitted on PRACH.

Note that in the present disclosure, downlink, uplink, and the like may be expressed without "link". Furthermore, various channels may be expressed without "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as the DL-RS.

The synchronization signal may be at least one of, for example, a primary synchronization signal (PSS) and a secondary synchronization signal (SSS). A signal block including the SS (PSS, SSS) and the PBCH (and the DMRS for the PBCH) may be referred to as an SS/PBCH block, an SS block (SSB), and the like. Note that the SS, the SSB, or the like may also be referred to as a reference signal.

In the radio communication system 1, a sounding reference signal (SRS), a demodulation reference signal (DMRS), and the like may be transmitted as an uplink reference signal (UL-RS). Note that, DMRSs may be referred to as "user terminal-specific reference signals (UE-specific Reference Signals)."

(Base Station)

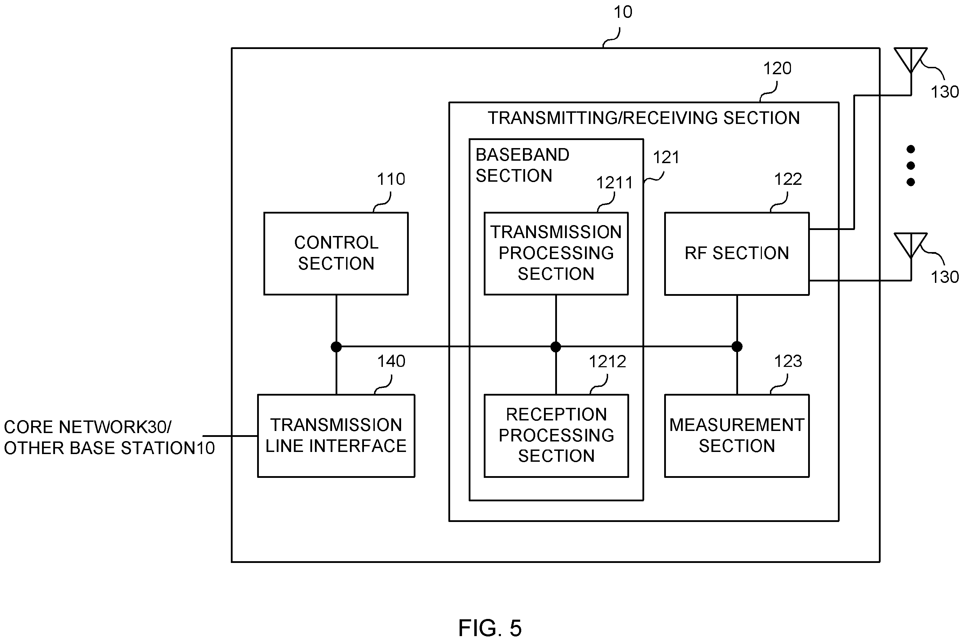

Fig. 5 is a diagram illustrating an example of a configuration of the base station according to an embodiment. The base station 10 includes a control section 110, a transmission/reception section 120, a transmission/reception antenna 130, and a transmission line interface 140. Note that one or more of the control sections 110, one or more of the transmission/reception sections 120, one or more of the transmission/reception antennas 130, and one or more of the transmission line interfaces 140 may be provided.

Note that, although this example will primarily illustrate functional blocks that pertain to characteristic parts of the present embodiment, it may be assumed that the base station 10 has other functional blocks that are necessary for radio communication as well. A part of processing of each section described below may be omitted.

The control section 110 controls the entire base station 10. The control section 110 can include a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmission/reception section 120, the transmission/reception antenna 130, and the transmission line interface 140. The control section 110 may generate data to be forwarded as a signal, control information, a sequence, and the like, and may transfer the data, the control information, the sequence, and the like to the transmission/reception section 120. The control section 110 may perform call processing (such as configuration or release) of a communication channel, management of the state of the base station 10, and management of a radio resource.

The transmission/reception section 120 may include a baseband section 121, a radio frequency (RF) section 122, and a measurement section 123. The baseband section 121 may include a transmission processing section 1211 and a reception processing section 1212. The transmission/reception section 120 can be implemented by a transmitter/receiver, an RF circuit, a baseband circuit, a filter, a phase shifter, a measurement circuit, a transmission/reception circuit, and the like, which are described based on common recognition in the technical field related to the present disclosure.

The transmission/reception section 120 may be configured as an integrated transmission/reception section, or may include a transmission section and a reception section. The transmission section may be configured by the transmission processing section 1211 and the RF section 122. The reception section may include the reception processing section 1212, the RF section 122, and the measurement section 123.

The transmission/reception antenna 130 can be implemented by an antenna described based on common recognition in the technical field related to the present disclosure, for example, an array antenna.

The transmission/reception section 120 may transmit the above-described downlink channel, synchronization signal, downlink reference signal, and the like. The transmission/reception section 120 may receive the above-described uplink channel, uplink reference signal, and the like.

The transmission/reception section 120 may form at least one of a Tx beam and a reception beam by using digital beam forming (for example, precoding), analog beam forming (for example, phase rotation), and the like.

The transmission/reception section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data or control information acquired from the control section 110 to generate a bit string to be transmitted.

The transmission/reception section 120 (transmission processing section 1211) may perform transmission processing such as channel encoding (which may include error correcting encoding), modulation, mapping, filtering processing, discrete Fourier transform (DFT) processing (if necessary), inverse fast Fourier transform (IFFT) processing, precoding, or digital-analog transform on the bit string to be transmitted, and may output a base band signal.

The transmission/reception section 120 (RF section 122) may perform modulation to a radio frequency range, filtering processing, amplification, and the like on the base band signal, to transmit a signal in the radio frequency range via the transmission/reception antenna 130.

Meanwhile, the transmission/reception section 120 (RF section 122) may perform amplification, filtering processing, demodulation to a base band signal, and the like on the signal in the radio frequency band received by the transmission/reception antenna 130.

The transmission/reception section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correction decoding), MAC layer processing, RLC layer processing, and PDCP layer processing on the acquired base band signal to acquire user data and the like.

The transmission/reception section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), or a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmission section and the reception section of the base station 10 in the present disclosure may include at least one of the transmission/reception section 120, the transmission/reception antenna 130, and the transmission line interface 140.

Incidentally, the transmission/reception section 120 transmits a given parameter used for uplink channel transmission power control. The transmission/reception section 120 may transmit information on at least one of the number of times of uplink channel transmission to which the UE applies the given parameter and the transmission range. The transmission/reception section 120 may transmit information on a plurality of parameter candidates used for transmission power control of the uplink channel and information for designating the given parameter from among the plurality of parameter candidates.

The transmission/reception section 120 may transmit a first parameter used for transmission power control of a first-type uplink channel and a second parameter used for transmission power control of a second-type uplink channel.

The control section 110 may control the number of times of uplink channel transmission to which the UE applies the given parameter used for transmission power control of the uplink channel and the transmission range.

(User Terminal)

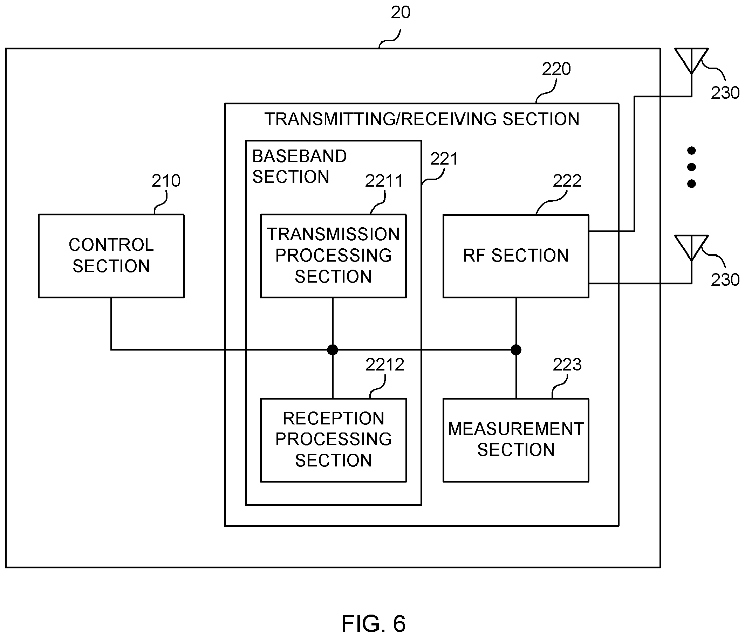

Fig. 6 is a diagram illustrating an example of a configuration of the user terminal according to an embodiment. The user terminal 20 includes a control section 210, a transmission/reception section 220, and a transmission/reception antenna 230. Note that one or more of the control sections 210, one or more of the transmission/reception sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, or the like, which is described based on common recognition in the technical field to which the present disclosure relates.

The control section 210 may control signal generation, mapping, and the like. The control section 210 may control transmission/reception, measurement, and the like using the transmission/reception section 220 and the transmission/reception antenna 230. The control section 210 may generate data to be forwarded as a signal, control information, a sequence, and the like, and may transfer the data, the control information, the sequence, and the like to the transmission/reception section 220.

The transmission/reception section 220 may include a baseband section 221, an RF section 222, and a measurement section 223. The baseband section 221 may include a transmission processing section 2211 and a reception processing section 2212. The transmission/reception section 220 can include a transmitter/receiver, an RF circuit, a baseband circuit, a filter, a phase shifter, a measurement circuit, a transmission/reception circuit, or the like, which is described based on common recognition in the technical field to which the present disclosure relates.

The transmission/reception section 220 may be configured as an integrated transmission/reception section, or may include a transmission section and a reception section. The transmission section may be configured by the transmission processing section 2211 and the RF section 222. The reception section may include the reception processing section 2212, the RF section 222, and the measurement section 223.

The transmission/reception antenna 230 can include an antenna, which is described based on common recognition in the technical field to which the present disclosure relates, for example, an array antenna.

The transmission/reception section 220 may receive the above-described downlink channel, synchronization signal, downlink reference signal, and the like. The transmission/reception section 220 may transmit the above-described uplink channel, uplink reference signal, and the like.

The transmission/reception section 220 may form at least one of a Tx beam and a reception beam by using digital beam forming (for example, precoding), analog beam forming (for example, phase rotation), and the like.

The transmission/reception section 220 (transmission processing section 2211) may perform PDCP layer processing, RLC layer processing (for example, RLC retransmission control), MAC layer processing (for example, HARQ retransmission control), and the like, for example, on data or control information acquired from the control section 210 to generate a bit string to be transmitted.

The transmission/reception section 220 (transmission processing section 2211) may perform transmission processing such as channel encoding (which may include error correcting coding), modulation, mapping, filtering processing, DFT processing (if necessary), IFFT processing, precoding, or digital-analog transform on a bit string to be transmitted, and may output a base band signal.

Note that whether or not to apply DFT processing may be determined based on configuration of transform precoding. When transform precoding is enabled for a channel (for example, PUSCH), the transmission/reception section 220 (transmission processing section 2211) may perform DFT processing as the transmission processing in order to transmit the channel using a DFT-s-OFDM waveform, and when it is not the case, DFT processing may not be performed as the transmission processing.

The transmission/reception section 220 (RF section 222) may perform modulation to a radio frequency band, filtering processing, amplification, and the like on the base band signal, and may transmit a signal in the radio frequency band via the transmission/reception antenna 230.

Meanwhile, the transmission/reception section 220 (RF section 222) may perform amplification, filtering processing, demodulation to a base band signal, and the like on the signal in the radio frequency band received by the transmission/reception antenna 230.

The transmission/reception section 220 (reception processing section 2212) may apply reception processing such as analog-digital transform, FFT processing, IDFT processing (if necessary), filtering processing, demapping, demodulation, decoding (which may include error correcting decoding), MAC layer processing, RLC layer processing, or PDCP layer processing on the acquired base band signal to acquire user data and the like.

The transmission/reception section 220 (measurement section 223) may perform measurement regarding the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmission section and the reception section of the user terminal 20 in the present disclosure may include at least one of the transmission/reception section 220 and the transmission/reception antenna 230.

Incidentally, the transmission/reception section 220 receives the given parameter used for uplink channel transmission power control. The transmission/reception section 220 may receive the information on at least one of the number of times of uplink channel transmission to which the given parameter is applied and the transmission range. The transmission/reception section 220 may receive information on the plurality of parameter candidates used for transmission power control of the uplink channel and the information for designating the given parameter from among the plurality of parameter candidates.

The transmission/reception section 220 may receive the first parameter used for transmission power control of the first-type uplink channel and the second parameter used for transmission power control of the second-type uplink channel.

The control section 210 may determine at least one of the number of times of uplink channel transmission to which the given parameter used for transmission power control of the uplink channel is applied and the transmission range based on the downlink control information.

The control section 210 may determine whether or not the uplink channel transmission to which the given parameter is applied is one time based on the type of the downlink control information.

In a case where the given parameter is transmitted in the downlink control information, the control section 210 may determine whether or not the uplink channel transmission to which the given parameter is applied is one time based on a bit value used for notification of the given parameter or a value associated with the bit value in the downlink control information.

The control section 210 may determine at least one of the number of times of uplink channel transmission to which the first parameter is applied and the transmission range based on given information, and may control the uplink channel transmission to which the second parameter is applied always one time.

(Hardware Configuration)

Note that the block diagrams that have been used to describe the above embodiments illustrate blocks in functional units. These functional blocks (configuration units) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (using wire, radio, or the like, for example) and using these apparatuses. The functional blocks may be implemented by combining software with the above-described single apparatus or the above-described plurality of apparatuses.

Here, the function includes, but is not limited to, deciding, determining, judging, calculating, computing, processing, deriving, investigating, searching, ascertaining, receiving, transmitting, outputting, accessing, solving, selecting, choosing, establishing, comparing, assuming, expecting, considering, broadcasting, notifying, communicating, forwarding, configuring, reconfiguring, allocating, mapping, and assigning. For example, a functional block (configuration unit) that causes transmission to function may be referred to as a transmitting unit, a transmitter, and the like. In any case, as described above, the implementation method is not particularly limited.

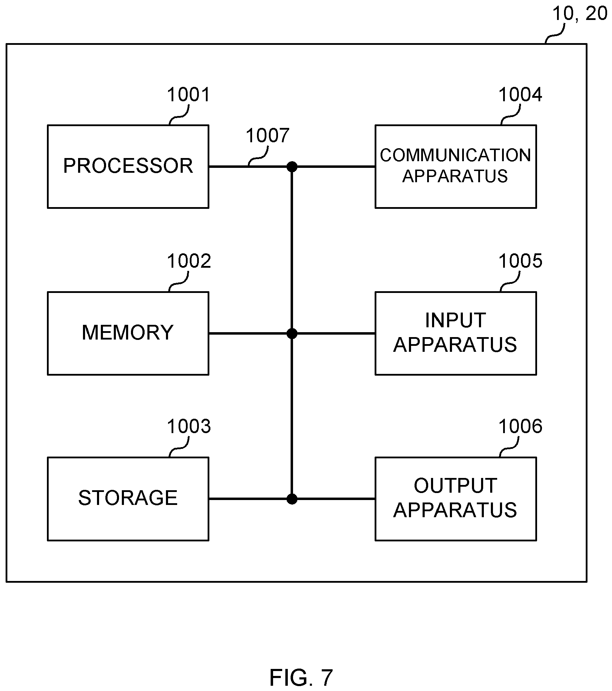

For example, the base station, the user terminal, and the like according to one embodiment of the present disclosure may function as a computer that executes the processing of the radio communication method of the present disclosure. Fig. 7 is a diagram illustrating an example of the hardware configuration of the base station and the user terminal according to an embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be configured to include one or a plurality of apparatuses illustrated in the drawings, or may be configured without including some apparatuses.

For example, although only one processor 1001 is illustrated, a plurality of processors may be provided. Further, the processing may be executed by one processor, or the processing may be executed in sequence or using other different methods by two or more processors. Note that the processor 1001 may be implemented with one or more chips.

Each of functions of the base station 10 and the user terminal 20 is implemented by causing predetermined software (program) to be read on hardware such as the processor 1001 or the memory 1002, thereby causing the processor 1001 to perform operation, controlling communication via the communication apparatus 1004, and controlling at least one of reading and writing of data in the memory 1002 and the storage 1003.

The processor 1001 may control the whole computer by, for example, running an operating system. The processor 1001 may be configured by a central processing unit (CPU) including an interface with peripheral equipment, a control apparatus, an operation apparatus, a register, and the like. For example, at least a part of the above-described control section 110(210), transmission/reception section 120(220), and the like may be implemented by the processor 1001.

Furthermore, the processor 1001 reads programs (program codes), software modules, or data, from at least one of the storage 1003 and the communication apparatus 1004, into the memory 1002, and executes various processing according to these. As the program, a program to cause a computer to execute at least a part of the operation described in the above-described embodiment is used. For example, the control section 110(210) may be implemented by a control program that is stored in the memory 1002 and operates in the processor 1001, and another functional block may be implemented similarly.

The memory 1002 is a computer-readable recording medium, and may include, for example, at least one of a read only memory (ROM), an erasable programmable ROM (EPROM), an electrically EPROM (EEPROM), a random access memory (RAM) and/or other appropriate storage media. The memory 1002 may be referred to as a register, a cache, a main memory (primary storage apparatus), and the like. The memory 1002 can store a program (program code), a software module, and the like, which are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, a key drive), a magnetic stripe, a database, a server, and other appropriate storage media. The storage 1003 may be referred to as an auxiliary storage apparatus.

The communication apparatus 1004 is hardware (transmitting/receiving device) for allowing inter-computer communication by using at least one of a wired network and a wireless network, and may be referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmission/reception section 120 (220), the transmission/reception antenna 130 (230), and the like described above may be implemented by the communication apparatus 1004. The transmission/reception section 120 (220) may be implemented by physically or logically separating a transmission section 120a (220a) and a reception section 120b (220b) from each other.

The input apparatus 1005 is an input device for receiving input from the outside (for example, a keyboard, a mouse, a microphone, a switch, a button, a sensor, and the like). The output apparatus 1006 is an output device that performs output to the outside (for example, a display, a speaker, a light emitting diode (LED) lamp, and the like). Note that the input apparatus 1005 and the output apparatus 1006 may be provided in an integrated configuration (for example, a touch panel).

Further, the apparatuses such as the processor 1001 and the memory 1002 are connected by the bus 1007 for communicating information. The bus 1007 may be configured with a single bus, or may be configured with different buses between apparatuses.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of these pieces of hardware.

(Modification)

Note that terms described in the present disclosure and terms necessary for understanding the present disclosure may be replaced with terms that have the same or similar meanings. For example, a channel, a symbol, and a signal (signal or signaling) may be replaced interchangeably. Further, the signal may be a message. The reference signal can be abbreviated as an RS, and may be referred to as a pilot, a pilot signal, and the like, depending on which standard applies. Furthermore, a component carrier (CC) may be referred to as a cell, a frequency carrier, a carrier frequency, and the like.

A radio frame may include one or a plurality of periods (frames) in a time domain. Each of the one or plurality of periods (frames) included in the radio frame may be referred to as a subframe. Further, the subframe may include one or a plurality of slots in the time domain. A subframe may be a fixed time duration (for example, 1 ms) that is not dependent on numerology.

Here, numerology may be a communication parameter applied to at least one of transmission and reception of a certain signal or channel. Numerology may indicate at least one of, for example, a subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, and a specific windowing processing performed by the transceiver in a time domain.

A slot may include one or a plurality of symbols in the time domain (orthogonal frequency division multiplexing (OFDM) symbols, single carrier frequency division multiple access (SC-FDMA) symbols, and the like). Further, the slot may be a time unit based on numerology.

A slot may include a plurality of mini slots. Each mini slot may include one or a plurality of symbols in the time domain. Further, the mini slot may be referred to as a sub slot. Each mini slot may include fewer symbols than a slot. PDSCH (or PUSCH) transmitted in a time unit larger than a mini slot may be referred to as PDSCH (PUSCH) mapping type A. A PDSCH (or PUSCH) transmitted using a mini slot may be referred to as PDSCH (PUSCH) mapping type B.

A radio frame, a subframe, a slot, a mini slot and a symbol all represent the time unit in signal transmission. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, one to thirteen symbols), or may be a period longer than 1 ms. Note that the unit to represent the TTI may be referred to as a slot, a mini slot or the like, instead of a subframe.

Here, the TTI refers to, for example, the minimum time unit of scheduling in radio communication. For example, in the LTE system, a base station performs scheduling to allocate radio resources (a frequency bandwidth and transmission power that can be used in each user terminal and the like) to each user terminal in TTI units. Note that the definition of TTI is not limited thereto.

The TTI may be the transmission time unit of channel-encoded data packets (transport blocks), code blocks, codewords, or the like, or may be the unit of processing in scheduling, link adaptation, or the like. Note that, when the TTI is given, a time interval (for example, the number of symbols) to which the transport block, code block, codeword, or the like is actually mapped may be shorter than the TTI.

Note that, when one slot or one mini slot is referred to as a TTI, one or more TTIs (that is, one or more slots or one or more mini slots) may be the minimum time unit of scheduling. Further, the number of slots (the number of mini slots) constituting the minimum time unit of scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI that is shorter than the usual TTI may be referred to as a shortened TTI, a short TTI, a partial TTI (or fractional TTI), a shortened subframe, a short subframe, a mini slot, a subslot, a slot, and the like.

Note that a long TTI (for example, a usual TTI, a subframe, or the like) may be replaced with a TTI having a time length exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be twelve, for example. The number of subcarriers included in the RB may be determined based on the numerology.

Further, the RB may include one or a plurality of symbols in the time domain, and may have a length of one slot, one mini slot, one subframe, or one TTI. One TTI, one subframe, and the like each may include one or a plurality of resource blocks.

Note that one or a plurality of RBs may be referred to as a physical resource block (PRB (Physical RB)), a subcarrier group (SCG (Sub-Carrier Group)), a resource element group (REG), a PRB pair, an RB pair, or the like.

Furthermore, a resource block may include one or a plurality of resource elements (REs). For example, one RE may be a radio resource area of one subcarrier and one symbol.

A bandwidth part (BWP) (which may be referred to as a partial bandwidth or the like) may represent a subset of consecutive common resource blocks (RBs) for a certain numerology in a certain carrier. Here, the common RB may be specified by the index of the RB based on a common reference point of the carrier. The PRB may be defined in a certain BWP and be numbered within the BWP.

The BWP may include BWP for UL (UL BWP) and BWP for DL (DL BWP). For the UE, one or a plurality of BWPs may be configured within one carrier.

At least one of the configured BWPs may be active, and it may not be assumed that the UE transmits and receives a given signal/channel outside the active BWP. Note that a "cell", a "carrier", or the like in the present disclosure may be replaced with the "BWP".

Note that the structures of radio frames, subframes, slots, mini slots, symbols and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol duration, the length of cyclic prefix (CP), and the like can be variously changed.

Further, the information, parameters, and the like described in the present disclosure may be represented using absolute values or relative values with respect to given values, or may be represented using other corresponding information. For example, a radio resource may be instructed by a given index.

The names used for parameters and the like in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using any of a variety of different technologies. For example, data, instructions, commands, information, signals, bits, symbols, chips, and the like all of which may be referenced throughout the above-described description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, a signal, and the like may be input/output via a plurality of network nodes.

The information, signals, and the like that are input and output may be stored in a specific location (for example, in a memory), or may be managed using a management table. The information, signal, and the like to be input and output can be overwritten, updated or appended. The output information, signal, and the like may be deleted. The information, signals, and the like that are input may be transmitted to another apparatus.

Notification of information may be performed not only by using the aspects/embodiments described in the present disclosure but also using another method. For example, notification of information in the present disclosure may be performed by using physical layer signaling (for example, downlink control information (DCI), uplink control information (UCI)), higher layer signaling (for example, radio resource control (RRC) signaling, broadcast information (master information block (MIB), system information block (SIB), or the like), medium access control (MAC) signaling, another signal, or a combination thereof.

Note that physical layer signaling may be referred to as Layer 1/Layer 2 (L1/L2) control information (L1/L2 control signals), L1 control information (L1 control signal), or the like. Further, the RRC signaling may be referred to as an RRC message, and may be, for example, an RRC connection setup message, an RRC connection reconfiguration message, and the like. Further, a notification of MAC signaling may be given using, for example, MAC control elements (CEs).

Further, a notification of given information (for example, notification of "being X") is not limited to explicit notification but may be performed implicitly (for example, by not performing notification of the given information or by performing notification of another piece of information).

Decisions may be made in values represented by one bit (0 or 1), may be made in Boolean values that represent true or false, or may be made by comparing numerical values (for example, comparison against a given value).

Regardless of whether software is referred to as software, firmware, middleware, microcode, or hardware description language, or referred to by other names, this should be interpreted broadly, to mean an instruction, an instruction set, a code, a code segment, a program code, a program, a subprogram, a software module, an application, a software application, a software package, a routine, a subroutine, an object, an executable file, an execution thread, a procedure, a function, and the like.

Further, software, instruction, information, and the like may be transmitted/received via a transmission medium. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology and the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be interchangeably used.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or a plurality of (for example, three) cells. In a case where the base station accommodates a plurality of cells, the entire coverage area of the base station can be partitioned into a plurality of smaller areas, and each smaller area can provide communication services through a base station subsystem (for example, small remote radio head (RRH) for indoors). The term "cell" or "sector" refers to a part or the whole of a coverage area of at least one of a base station and a base station subsystem that perform a communication service in this coverage.

In the present disclosure, the terms such as "mobile station (MS)", "user terminal", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other appropriate terms.

At least one of the base station and the mobile station may be referred to as a transmitting apparatus, a receiving apparatus, a radio communication apparatus, and the like. Note that at least one of the base station and the mobile station may be a device mounted on a moving body, a moving body itself, and the like. The moving body may be a transportation (for example, a car, an airplane and the like), an unmanned moving body (for example, a drone, an autonomous car, and the like), or a (manned or unmanned) robot. Note that at least one of the base station and the mobile station also includes an apparatus that does not necessarily move during a communication operation. For example, at least one of the base station and the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In the case, the user terminal 20 may have the function of the above-described base station 10. Further, terms such as "uplink" and "downlink" may be replaced with terms corresponding to communication between terminals (for example, "side"). For example, the uplink channel, the downlink channel, and the like may be replaced with a side channel.

Similarly, the user terminal in the present disclosure may be replaced with a base station. In this case, the base station 10 may be configured to have the above-described functions of the user terminal 20.

In the present disclosure, the operation performed by the base station may be performed by an upper node thereof in some cases. In a network including one or a plurality of network nodes with base stations, it is clear that various operations performed for communication with a terminal can be performed by a base station, one or a plurality of network nodes (examples of which include but are not limited to mobility management entity (MME) and serving-gateway (S-GW)) other than the base station, or a combination thereof.

Each aspect/embodiment described in the present disclosure may be used alone, used in combination, or switched in association with execution. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined (for example, a combination of LTE or LTE-A and 5G) and applied.

The phrase "based on" as used in the present disclosure does not mean "based on only", unless otherwise specified. In other words, the phrase "based on" means both "based on only" and "based on at least"

Any reference to an element using designations such as "first" and "second" used in the present disclosure does not generally limit the amount or order of these elements. These designations can be used in the present disclosure, as a convenient way of distinguishing between two or more elements. Therefore, reference to the first and second elements does not mean that only two elements are adoptable, or that the first element must precede the second element in some way.

The term "determining" used in the present disclosure may include a wide variety of operations. For example, "determining" may be regarded as "determining" of judging, calculating, computing, processing, deriving, investigating, looking up, search, inquiry (for example, looking up in a table, database, or another data structure), ascertaining, and the like.

Furthermore, "determining" may be regarded as "determining" of receiving (for example, receiving of information), transmitting (for example, transmitting of information), input, output, accessing (for example, accessing to data in a memory), and the like.

Further, "determining" may be regarded as "determining" of resolving, selecting, choosing, establishing, comparing, and the like. In other words, "determining" may be regarded as "determining" of a certain operation.

Further, "determining" may be replaced with "assuming", "expecting", "considering", and the like.

The "maximum transmission power" described in the present disclosure may mean a maximum value of transmission power, a nominal maximum transmission power (the nominal UE maximum transmit power), or a rated maximum transmission power (the rated UE maximum transmit power).

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

As used in the present disclosure, when two elements are connected, these elements may be considered to be "connected" or "coupled" to each other by using one or more electrical wires, cables, printed electrical connections, and the like, and, as some non-limiting and non-inclusive examples, by using electromagnetic energy and the like having wavelengths in the radio frequency, microwave, and optical (both visible and invisible) domains.

In the present disclosure, the phrase "A and B are different" may mean "A and B are different from each other". Note that the description may mean that "A and B are different from C". The terms such as "leave", "coupled", and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, for example, when translations add articles, such as a, an, and the in English, the present disclosure may include that the noun that follows these articles is in the plural.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined based on the description of claims. Consequently, the description of the present disclosure is provided for the purpose of exemplification and explanation, and has no limitative meaning to the invention according to the present disclosure.

This application is based on Japanese Patent Application No. 2019-092451 filed on May 15, 2019. The contents of this are all incorporated herein.

**Claims**

1. A user terminal comprising:

   a reception section that receives a given parameter used for transmission power control of an uplink channel; and
   a control section that determines at least one of the number of times of uplink channel transmission to which the given parameter is applied and a transmission range based on downlink control information.

2. The user terminal according to claim 1, wherein the control section determines, based on a type of the downlink control information, whether or not the uplink channel transmission to which the given parameter is applied is one time.

3. The user terminal according to claim 1 or 2, wherein the reception section receives information on a plurality of parameter candidates used for the transmission power control of the uplink channel, and information for designating the given parameter from the plurality of parameter candidates.

4. The user terminal according to claim 1, wherein in a case where the given parameter is transmitted in the downlink control information, the control section determines, based on a bit value used for notification of the given parameter or a value associated with the bit value in the downlink control information, whether or not the uplink channel transmission to which the given parameter is applied is one time.

5. A user terminal comprising:

   a reception section that receives a first parameter used for transmission power control of a first-type uplink channel and a second parameter used for transmission power control of a second-type uplink channel; and
   a control section that determines at least one of the number of times of uplink channel transmission to which the first parameter is applied and a transmission range based on given information, and controls uplink channel transmission to which the second parameter is applied always one time.

6. A radio communication method comprising:

   receiving a given parameter used for transmission power control of an uplink channel; and
   determining at least one of the number of times of UL channel transmission to which the given parameter is applied and a transmission range based on downlink control information.

FIG. 1

SCHEDULE

SCHEDULE

PUSCH#A2

PUSCH#A1

PDCCH#A2

PDCCH#A1

ONE SHOT

TIME

FREQUENCY

FIG. 2

FIG. 3

FIG. 4

FIG. 5

EP 3 972 363 A1

FIG. 6

10, 20

1001

PROCESSOR

1007

1004

COMMUNICATION APPARATUS

1002

MEMORY

1005

INPUT APPARATUS

1003

STORAGE

1006

OUTPUT APPARATUS

FIG. 7

# EP 3 972 363 A1

<table>
<tr><td colspan="2" align="center"><b>INTERNATIONAL SEARCH REPORT</b></td><td colspan="2">International application No.<br>PCT/JP2020/019331</td></tr>
</table>

**A. CLASSIFICATION OF SUBJECT MATTER**

H04W 72/04(2009.01)i; H04W 52/18(2009.01)i; H04W 52/54(2009.01)i
FI: H04W52/18; H04W72/04 136; H04W52/54

According to International Patent Classification (IPC) or to both national classification and IPC

**B. FIELDS SEARCHED**

Minimum documentation searched (classification system followed by classification symbols)
H04W72/04; H04W52/18; H04W52/54

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2019/069571 A1 (PANASONIC INTELLECTUAL PROPERTY CORPORATION OF AMERICA) 11.04.2019 (2019-04-11) paragraphs [0010]-[0024], [0045] | 1, 3, 6 |
| Y | paragraphs [0118]-[0120] | 2 |
| A | paragraphs [0010]-[0024], [0045], [0118]-[0120] | 4-5 |
| Y | JP 2013-236289 A (SHARP CORP.) 21.11.2013 (2013-11-21) paragraph [0201] | 2 |
| A | VIVO, "Power control enhancements for UL intra-UE multiplexing" [online], 3GPP TSG RAN WG1 #96 R1-1901700, 16 February 2019, section 2 | 5 |

☐ Further documents are listed in the continuation of Box C.   ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 August 2020 (04.08.2020) | 18 August 2020 (18.08.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2020/019331

| Patent Documents referred in the Report | Publication Date | Patent Family | Publication Date |
|---|---|---|---|
| WO 2019/069571 A1 | 11 Apr. 2019 | (Family: none) | |
| JP 2013-236289 A | 21 Nov. 2013 | US 2015/0085787 A1 paragraph [0259] WO 2013/168793 A1 EP 2849517 A1 CN 104322124 A | |

Form PCT/ISA/210 (patent family annex) (January 2015)

**EP 3 972 363 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019092451 A